(19) Europäisches Patentamt
European Patent Office
Office européen des brevets

(11) **EP 4 586 692 A1**

(12) **EUROPEAN PATENT APPLICATION**
published in accordance with Art. 153(4) EPC

(43) Date of publication:
**16.07.2025 Bulletin 2025/29**

(21) Application number: **23884539.0**

(22) Date of filing: **07.10.2023**

(51) International Patent Classification (IPC):
***H04W 48/10*** (2009.01)

(52) Cooperative Patent Classification (CPC):
**H04W 48/00; H04W 48/10; H04W 56/00; H04W 84/06**

(86) International application number:
**PCT/CN2023/123206**

(87) International publication number:
**WO 2024/093607 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2022 CN 202211380676**

(71) Applicant: **Huawei Technologies Co., Ltd.**
**Shenzhen, Guangdong 518129 (CN)**

(72) Inventors:
• **SHI, Meng**
**Shenzhen, Guangdong 518129 (CN)**
• **LIAO, Shuri**
**Shenzhen, Guangdong 518129 (CN)**
• **DOU, Shengyue**
**Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **COMMUNICATION METHOD AND APPARATUS**

(57) This application provides a communication method and apparatus. The method includes: determining first SSB information based on a first frequency point and first information; and receiving, on the first frequency point based on the first SSB information, an SSB sent by a network device, where the first information includes correspondences between a plurality of frequency points in an operating band to which the first frequency point belongs and a plurality of pieces of SSB information, the operating band to which the first frequency point belongs is determined by one frequency range, the correspondences between the plurality of frequency points and the plurality of pieces of SSB information include a correspondence between the first frequency point and the first SSB information, and each of the plurality of pieces of SSB information includes at least one of the following: an SSB periodicity, a maximum quantity of candidate SSBs, and a location of the candidate SSB. According to embodiments of this application, an unnecessary access delay can be reduced, and further access performance can be improved.

FIG. 4

# EP 4 586 692 A1

## Description

This application claims priority to Chinese Patent Application No. 202211380676.9, filed with the China National Intellectual Property Administration on November 4, 2022 and entitled "COMMUNICATION METHOD AND APPARATUS", which is incorporated herein by reference in its entirety.

## TECHNICAL FIELD

This application relates to the field of communication technologies, and in particular, to a communication method and apparatus.

## BACKGROUND

Currently, in an initial access process, a terminal device generally determines a synchronization signal block (synchronization signal block, SSB) pattern (pattern) based on an operating band and a subcarrier spacing (subcarrier spacing, SCS). However, in an existing protocol, one type of SCS in one operating band supports only one type of SSB pattern. As a result, in a same operating band, the terminal device can only receive, based on the SSB pattern, an SSB sent by a network device. In other words, in a same operating band, the terminal device can only receive an SSB based on a default SSB pattern. This may cause a problem that an access delay generated when the SSB is received based on the default SSB pattern is large. For example, when the default SSB pattern is defined as 256 SSBs and a default SSB periodicity of 640 ms, the terminal device performs SSB search based on 640 ms by default. When a quantity of SSBs required by the network device to cover the terminal device is reduced to 128 SSBs, only 320 ms is required to complete scanning of the 128 SSBs. If the terminal device still performs SSB search based on 640 ms defined in the default SSB pattern, an unnecessary access delay is increased, and access performance is affected.

## SUMMARY

This application provides a communication method and apparatus, to reduce an unnecessary access delay, and further improve access performance.

According to a first aspect, a communication method is provided, including: determining first SSB information based on a first frequency point and first information; and receiving, on the first frequency point based on the first SSB information, an SSB sent by a network device, where the first information includes correspondences between a plurality of frequency points in an operating band to which the first frequency point belongs and a plurality of pieces of SSB information, the operating band to which the first frequency point belongs is determined by one frequency range, the correspondences between the plurality of frequency points and the plurality of pieces of SSB information include a correspondence between the first frequency point and the first SSB information, and each of the plurality of pieces of SSB information includes at least one of the following: an SSB periodicity, a maximum quantity of candidate SSBs, and a location of the candidate SSB. Generally, an SSB is used by a terminal device to access a network device. In the method provided in the first aspect, one frequency range may support different SSB information (including one or more of the SSB periodicity, the maximum quantity of candidate SSBs, and the location of the candidate SSB), and one frequency range may define one operating band, that is, one operating band may support different SSB information. In this way, in a same operating band, the terminal device can determine, from the correspondences between the plurality of frequency points and the plurality of pieces of SSB information, the first SSB information corresponding to the first frequency point, and may further receive, on the first frequency point based on the first SSB information corresponding to the first frequency point, the SSB sent by the network device. In other words, the terminal device may receive, in one operating band by using one of a plurality of pieces of candidate SSB information, the SSB sent by the network device, so that there are more possibilities for SSB information used in a same operating band to meet different access requirements. This helps reduce an unnecessary access delay, and further improves access performance.

In a possible implementation, the first frequency point may be, for example, a prior frequency point stored by the terminal device, and the prior frequency point may be, for example, a frequency point on which the terminal device successfully camps previously or a frequency point on which the terminal device successfully decodes broadcast signals previously.

In another possible implementation, the first frequency point may be, for example, any frequency point in all frequency ranges supported by the terminal device, and all the frequency ranges supported by the terminal device may be, for example, some or all of frequency ranges predefined in a protocol. Generally, in a frequency band search process, the terminal device may sort frequency points in all frequency ranges supported by the terminal device based on energy of received signals. For example, the terminal device may measure reference signal received power (reference signal received power, RSRP), reference signal received quality (reference signal received quality, RSRQ), or received signal

2

strength indicators (received signal strength indicators, RSSIs) of signals received on the frequency points, and then sort the frequency points in descending order of the RSRP, the RSRQ, the RSSIs, or the like. Specifically, for example, the terminal device may first determine SSB information corresponding to a frequency point with highest RSRP, highest RSRQ, or a highest RSSI. If no SSB is obtained based on the SSB information corresponding to the frequency point with the highest RSRP, the highest RSRQ, or the highest RSSI, the terminal device determines SSB information corresponding to a next frequency point, and continues determining SSB information corresponding to a next frequency point until an SSB is obtained based on corresponding SSB information.

It should be noted that the terminal device usually first performs SSB search on the prior frequency point. If the terminal device obtains an SSB on the prior frequency point but fails to access a network device, the terminal device may perform SSB search on the frequency points in all frequency ranges supported by the terminal device. All frequency ranges supported by the terminal device may be one or more frequency ranges, and one operating band may be determined by each of the one or more frequency ranges. Therefore, the terminal device may perform SSB search on all operating bands one by one, and stop performing SSB search on a next operating band when an SSB is found.

In this application, different frequency ranges predefined in the protocol may be divided into different operating bands. Some or all of the different operating bands may correspond to a same parameter. The parameter may include, for example, at least one of the following: a radio frequency indicator requirement, a subcarrier spacing (subcarrier spacing, SCS) of an SSB, a duplex mode, an applicable scenario, a channel bandwidth, a synchronization raster, and the like. The radio frequency indicator requirement may include, for example, transmit power. The duplex mode may include, for example, at least one of the following: a time division duplex (time division duplex, TDD) mode and a frequency division duplex (frequency division duplex, FDD) mode. The applicable scenario may include, for example, at least one of the following: a frequency domain range (frequency range, FR) 1 scenario and an FR 2 scenario. The synchronization raster may be understood as a frequency domain position of a candidate SSB. The frequency domain position of the candidate SSB may be understood as a frequency domain position of a reference subcarrier in the candidate SSB. The reference subcarrier is usually a center subcarrier of the candidate SSB. For example, the reference subcarrier is a subcarrier numbered 120 in 240 consecutive subcarriers occupied by the candidate SSB. The candidate SSB may be understood as an SSB that may be sent by the network device. A maximum quantity of candidate SSBs may be understood as a maximum quantity of SSBs that may be sent by the network device. A location of the candidate SSB may be understood as one or more of the following: an index of the candidate SSB, a time domain position of the candidate SSB, a transmission opportunity of the candidate SSB, and the like. The index of the candidate SSB may also be referred to as a candidate index.

It should be noted that, in this application, one frequency range predefined in the protocol may include an interval determined by a maximum frequency and a minimum frequency. The frequency range may further include a boundary point or exclude a boundary point, for example, the maximum frequency and/or the minimum frequency. This is not limited herein.

The operating band to which the first frequency point belongs is determined by one frequency range. For example, it may be understood as that the operating band to which the first frequency point belongs is one operating band determined by one frequency range predefined in the protocol. Different frequency ranges predefined in the protocol may be divided into different operating bands. This indicates that a plurality of operating bands need to be determined by a plurality of frequency ranges predefined in the protocol. Therefore, in this application, the operating band to which the first frequency point belongs is not an operating band formed by combining a plurality of operating bands.

In this application, the SSB may include a primary synchronization signal (primary synchronization signal, PSS), a secondary synchronization signal (secondary synchronization signal, SSS), and a physical broadcast channel (physical broadcast channel, PBCH). The SSB may be used by the terminal device to access the network device.

Optionally, with reference to the first aspect, a second frequency point and a third frequency point in the plurality of frequency points respectively belong to a first frequency point number range and a second frequency point number range, and the first frequency point number range and the second frequency point number range partially overlap. In this way, frequency points belonging to different frequency point number ranges may be arranged in a cross manner on an operating band to which the first frequency point belongs.

Optionally, with reference to the first aspect, a fourth frequency point and a fifth frequency point in the plurality of frequency points respectively belong to a third frequency point number range and a fourth frequency point number range, and the third frequency point number range and the fourth frequency point number range do not overlap. In this way, frequency points belonging to different frequency point number ranges may be arranged in a partition manner on an operating band to which the first frequency point belongs.

Optionally, with reference to the first aspect, an interval between adjacent synchronization rasters corresponding to a same piece of SSB information in the plurality of pieces of SSB information is determined based on a unit interval, and the unit interval is a unit interval between adjacent synchronization rasters corresponding to a same piece of SSB information in the plurality of pieces of SSB information. This indicates that the interval between adjacent synchronization rasters corresponding to a same piece of SSB information in the plurality of pieces of SSB information is related to the unit interval.

Optionally, with reference to the first aspect, that the interval between adjacent synchronization rasters corresponding to a same piece of SSB information in the plurality of pieces of SSB information is determined based on the unit interval includes: The interval between adjacent synchronization rasters corresponding to a same piece of SSB information in the plurality of pieces of SSB information is determined based on a quantity of the plurality of pieces of SSB information and the unit interval. This indicates that the interval between adjacent synchronization rasters corresponding to a same piece of SSB information in the plurality of pieces of SSB information is related to the quantity of the plurality of pieces of SSB information and the unit interval.

According to a second aspect, a communication apparatus is provided. The communication apparatus includes a module configured to perform the method according to any one of the implementations of the first aspect.

According to a third aspect, a communication apparatus is provided, including a processor. The processor is coupled to a memory. The memory stores a computer program. The processor is configured to invoke the computer program in the memory, so that the communication apparatus performs the method according to any one of the implementations of the first aspect.

In a possible design, the communication apparatus may be a chip or a device including a chip that implements the method in the first aspect.

According to a fourth aspect, a communication apparatus is provided, including a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method according to any one of the implementations of the first aspect by using a logic circuit or by executing code instructions.

According to a fifth aspect, a computer-readable storage medium is provided. The storage medium stores a computer program or instructions. When the computer program or the instructions are executed by a computer, the method according to any one of the implementations of the first aspect is implemented.

According to a sixth aspect, a computer program product is provided. When a computer reads and executes the computer program product, the computer is enabled to perform the method according to any one of the implementations of the first aspect.

According to a seventh aspect, a communication system is provided. The communication system includes a terminal device that performs the method according to any one of the implementations of the first aspect and a network device that communicates with the terminal device.

## BRIEF DESCRIPTION OF DRAWINGS

The following briefly describes the accompanying drawings used for describing embodiments.

FIG. 1 shows a basic architecture of a communication system according to an embodiment of this application;
FIG. 2 is a diagram of NTN-device-based RAN architectures to which an embodiment of this application is applicable;
FIG. 3 is a diagram of a hardware structure applicable to a communication apparatus according to an embodiment of this application;
FIG. 4 is a schematic flowchart of a communication method according to an embodiment of this application;
FIG. 5 is a diagram in which frequency points belonging to different frequency point number ranges are arranged in a cross manner on an operating band 1 according to an embodiment of this application;
FIG. 6 is a diagram in which frequency points belonging to different frequency point number ranges are arranged in a partition manner on an operating band 1 according to an embodiment of this application;
FIG. 7 is a diagram of a structure of a communication apparatus according to an embodiment of this application;
FIG. 8 is a diagram of a simplified structure of a terminal device according to an embodiment of this application; and
FIG. 9 is a diagram of a simplified structure of a network device according to an embodiment of this application.

## DESCRIPTION OF EMBODIMENTS

The following describes the technical solutions in embodiments of this application with reference to the accompanying drawings in embodiments of this application. The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. "At least one of the following items (pieces)" or a similar expression thereof means any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural. In addition, to clearly describe the technical solutions in embodiments of this application, the terms such as "first" and "second" are used in embodiment of this application to distinguish between same items or similar items that provide basically same network elements or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

The objectives, technical solutions, and beneficial effects of this application are further described in detail in the following specific implementations. It should be understood that the following descriptions are merely specific implementations of this application, but are not intended to limit the protection scope of this application. Any modification, equivalent replacement, or improvement made based on the technical solutions of this application shall fall within the protection scope of this application.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that the technical solutions in embodiments of this application are applicable to a long term evolution (long term evolution, LTE) architecture, a 5th generation mobile communication technology (5th generation mobile network, 5G), a wireless local area network (wireless local area network, WLAN) system, a V2X communication system, and the like. The technical solutions in embodiments of this application are further applicable to another future communication system, for example, a 6G communication system. In the future communication system, a same function may be maintained, but a name may be changed.

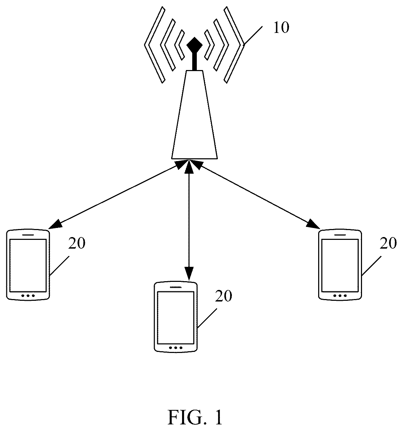

The following describes a basic architecture of a communication system provided in embodiments of this application. FIG. 1 shows a basic architecture of a communication system according to an embodiment of this application. As shown in FIG. 1, the communication system may include a network device 10 and one or more terminal devices (for example, a terminal device 20 in FIG. 1) communicating with the network device 10. FIG. 1 is merely a diagram, and does not constitute a limitation on a scenario to which the technical solutions provided in this application are applicable.

In this application, the network device may be a terrestrial network (terrestrial network, TN) device or a non-terrestrial network (non-terrestrial network, NTN) device.

The terrestrial network device is an entity that is on a network side and that is configured to send a signal, receive a signal, or send a signal and receive a signal. The terrestrial network device may be an apparatus that is deployed in a radio access network (radio access network, RAN) and that provides a wireless communication function for the terminal device, for example, may be a transmission reception point (transmission reception point, TRP), a base station, or control nodes in various forms, for example, a network controller, a radio controller, or a radio controller in a cloud radio access network (cloud radio access network, CRAN) scenario. Specifically, the terrestrial network device may be a macro base station, a micro base station (also referred to as a small station), a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission point (transmitting and receiving point, TRP), a transmitting point (transmitting point, TP), a mobile switching center, a satellite, an uncrewed aerial vehicle, or the like in various forms, or may be an antenna panel of a base station. The control node may be connected to a plurality of base stations, and configure resources for a plurality of terminals covered by the plurality of base stations. In systems using different radio access technologies, names of devices with the base station function may be different. For example, the device may be a gNB in 5G, a network side device in a network after 5G, a terrestrial network device in a future evolved public land mobile (communication) network (public land mobile network, PLMN), or a device that has a base station function in device-to-device (Device-to-Device, D2D) communication, machine-to-machine (Machine-to-Machine, M2M) communication, or internet of vehicles communication. A specific name of the terrestrial network device is not limited in this application. In addition, the terrestrial network device may further include a distributed unit (distributed unit, DU) and a central unit (central unit, CU).

The non-terrestrial network device may provide a wireless access service for the terminal device, schedule a radio resource for the accessed terminal device, and provide a reliable wireless transmission protocol, a data encryption protocol, and the like. The non-terrestrial network device may be a base station used for wireless communication, such as an artificial earth satellite and a high-altitude aircraft, for example, a medium earth orbit (medium earth orbit, MEO) satellite or a low earth orbit (low earth orbit, LEO) satellite in a non-geostationary earth orbit (non-geostationary earth orbit, NGEO), or a high altitude communication platform (high altitude platform station, HAPS). The terrestrial network device may also have a relay forwarding function, and transparently transmit (transparent) a wireless signal to the terminal device.

The terminal device is a user-side entity that is configured to receive a signal, send a signal, or receive a signal and send a signal. The terminal device may be configured to provide one or more of a voice service and a data connectivity service for a user. The terminal device may be a device that includes a wireless transceiver function and that can cooperate with the network device to provide a communication service for the user. Specifically, the terminal device may be user equipment (user equipment, UE), an access terminal, a subscriber unit, a subscriber station, a mobile station, a remote station, a remote terminal, a mobile device, a terminal, a wireless communication device, a user agent, a user apparatus, or a road side unit (road side unit, RSU). The terminal device may alternatively be an uncrewed aerial vehicle, an internet of things (internet of things, IoT) device, a station (station, ST) in a WLAN, a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a computing device or another processing device connected to a wireless modem, a vehicle-mounted device, a wearable device (also referred to as a wearable intelligent device), a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal device may alternatively be a device-to-device (device-to-device, D2D) device, for example, an electricity meter or a water meter. Alternatively, the terminal device may be a terminal in a 5G system, or a terminal in a next generation communication system. This is not limited in embodiments of this application.

The following describes five NTN-device-based RAN architectures by using an example in which a non-terrestrial network device is a satellite.

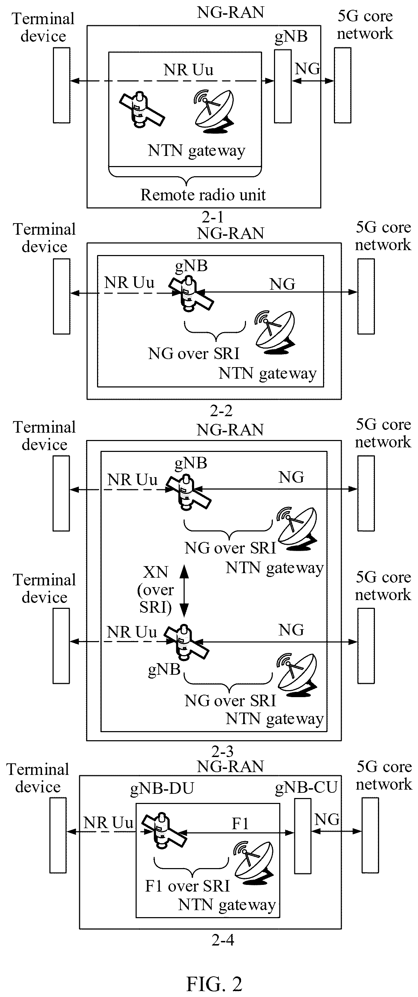

FIG. 2 is a diagram of NTN-device-based RAN architectures to which an embodiment of this application is applicable. As shown in FIG. 2, an NTN-based RAN architecture may include UE, a RAN, and a 5G core network (core network, CN).

The architecture shown in 2-1 in FIG. 2 is a transparent satellite architecture (RAN architecture with transparent satellite). The RAN may include a remote radio unit (remote radio unit, RRU) and a gNB. The RRU may include a satellite and an NTN gateway (gateway). The UE communicates with the gNB through a universal terrestrial radio access network-user (universal terrestrial radio access network-user, Uu) interface. The satellite may implement transparent payload transmission between a user and the gNB. The satellite and the NTN gateway may be considered as remote radio units (remote radio units) of the gNB, and implement transparent forwarding of a signal. In other words, the satellite supports only functions such as radio frequency filtering, frequency conversion, and amplification, with a signal waveform remaining unchanged. Forwarding performed by the satellite is transparent to a terminal device. To be specific, the satellite is mainly used as a relay device at an L1 layer (L1 relay) for regenerating a physical layer signal, and the physical layer signal is invisible to a higher layer. The gNB and the CN may communicate with each other through a next generation network (next generation, NG) interface, and exchange non-access stratum (non-access stratum, NAS) signaling of the core network and service data of the UE through the NG interface.

A regenerative (regenerative) satellite in the architecture shown in 2-2 in FIG. 2 does not have an inter-satellite link (inter-satellite link, ISL), and the gNB implements payload transmission. The RAN includes a gNB and an NTN gateway, and a satellite is used as the gNB. The satellite communicates with the NTN gateway through a satellite radio interface (satellite radio interface, SRI). The UE communicates with the gNB through a Uu interface. The gNB and the CN may communicate with each other through an NG interface, and exchange NAS signaling of the core network and service data of the UE through the NG interface.

A regenerative satellite in the architecture shown in 2-3 in FIG. 2 has an ISL, and the gNB processes the payload. The RAN includes a gNB and an NTN gateway, and a satellite is used as the gNB. The satellite communicates with the NTN gateway through an SRI. Satellites may communicate with each other through an Xn interface on the ISL. The UE communicates with the gNB through a Uu interface. The gNB and the CN may communicate with each other through an NG interface, and exchange NAS signaling of the core network and service data of the UE through the NG interface.

A RAN in the architecture shown in 2-4 in FIG. 2 includes a DU and a CU, and a satellite is used as the DU. The CU and the DU may jointly complete functions of a base station. The CU communicates with the DU through an F1 interface, and the DU communicates with the NTN gateway through an F1 interface on an SRI. The UE communicates with the DU through a Uu interface. The CU and the CN may communicate with each other through an NG interface, and exchange NAS signaling of the core network and service data of the UE through the NG interface.

In another NTN-based RAN device architecture, a satellite has a gNB processed payload based on relay-like architectures (gNB processed payload based on relay-like architectures). For example, the satellite is used as integrated access and backhaul (integrated access and backhaul, IAB). An IAB node is configured to provide a wireless backhaul (backhaul) service for a node (for example, a terminal device) wirelessly connected to a wireless backhaul node. The wireless backhaul service is a data and/or signaling backhaul service provided through a wireless backhaul link. The IAB node is a specific name of a relay node, and constitutes no limitation on the solutions of this application.

Optionally, the devices in FIG. 1 or FIG. 2 may be implemented by one device, may be jointly implemented by a plurality of devices, or may be one functional module in one device. This is not specifically limited in this embodiment of this application. It may be understood that the foregoing function may be a network element in a hardware device, a software function running on dedicated hardware, or a virtualization function instantiated on a platform (for example, a cloud platform).

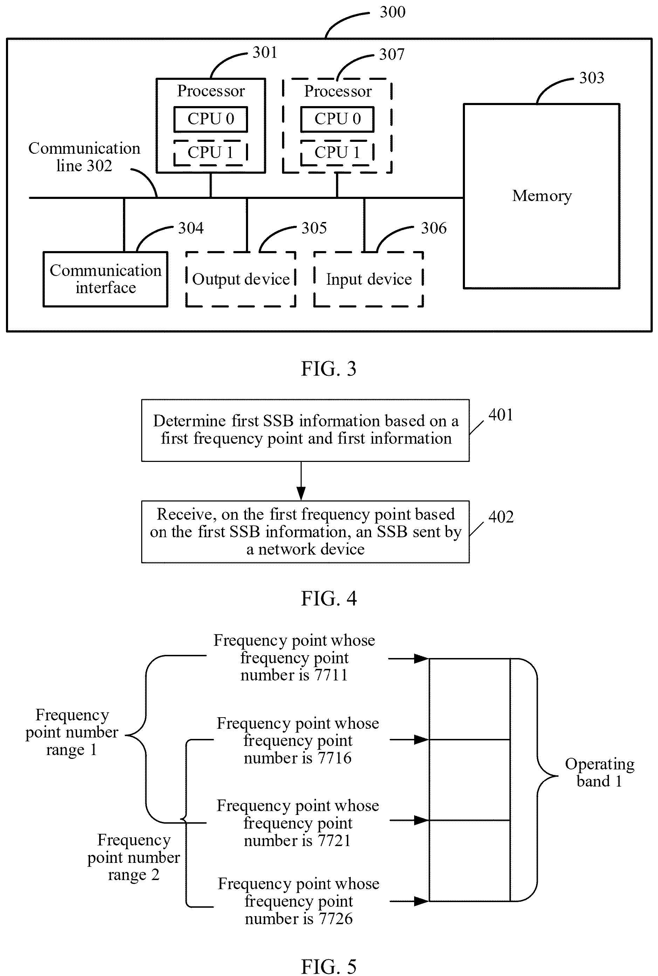

For example, each device in FIG. 1 or FIG. 2 may be implemented by using a communication apparatus 300 in FIG. 3. FIG. 3 is a diagram of a hardware structure applicable to a communication apparatus according to an embodiment of this application. The communication apparatus 300 includes at least one processor 301, a communication line 302, a memory 303, and at least one communication interface 304.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 302 may include a path for transmitting information between the foregoing components.

The communication interface 304 is any apparatus (for example, an antenna) like a transceiver, and is configured to communicate with another device or a communication network. The communication network may be, for example, an Ethernet, a RAN, or a wireless local area network (wireless local area networks, WLAN).

The memory 303 may be a read-only memory (read-only memory, ROM), another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, or the like), a magnetic disk storage medium or another magnetic storage device, or any other medium that can be used to carry or store expected program code in a form of an instruction or a data structure and that can be accessed by a computer. However, this is not limited thereto. The memory may exist independently, and is connected to the processor through the communication line 302. The memory may alternatively be integrated with the processor. The memory provided in embodiments of this application may be usually non-volatile.

The memory 303 is configured to store computer-executable instructions for executing the solutions of this application, and the execution is controlled by the processor 301. The processor 301 is configured to execute the computer-executable instructions stored in the memory 303, to implement methods provided in the following embodiments of this application.

Optionally, the computer-executable instructions in this embodiment of this application may also be referred to as application program code. This is not specifically limited in this embodiment of this application.

In a possible implementation, the processor 301 may include one or more CPUs, for example, a CPU 0 and a CPU 1 in FIG. 3.

In a possible implementation, the communication apparatus 300 may include a plurality of processors, for example, the processor 301 and a processor 307 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

In a possible implementation, the communication apparatus 300 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 communicates with the processor 301, and may receive an input of a user in a plurality of manners. For example, the input device 306 may be a mouse, a keyboard, a touchscreen device, or a sensor device.

The foregoing communication apparatus 300 may be a general-purpose device or a specialpurpose device. In a specific implementation, the communication apparatus 300 may be a desktop computer, a portable computer, a network server, a palmtop computer (personal digital assistant, PDA), a mobile phone, a tablet computer, a wireless terminal device, an embedded device, or a device having a similar structure in FIG. 3. A type of the communication apparatus 300 is not limited in embodiments of this application.

The following describes this solution with reference to the accompanying drawings.

FIG. 4 is a schematic flowchart of a communication method according to an embodiment of this application. The method includes but is not limited to the following steps.

401: A terminal device determines first SSB information based on a first frequency point and first information.

In a possible implementation, the first frequency point may be, for example, a prior frequency point stored by the terminal device, and the prior frequency point may be, for example, a frequency point on which the terminal device successfully camps previously or a frequency point on which the terminal device successfully decodes broadcast signals previously. The frequency point on which the terminal device successfully camps previously may be understood as a frequency point used by the terminal device to establish an RRC connection previously by using a random access procedure. The frequency point on which the terminal device successfully decodes broadcast signals previously may be understood as a frequency point on which the terminal device successfully decodes system information previously. The system information includes a system information block 1 and/or a system information block 19.

In another possible implementation, the first frequency point may be, for example, any frequency point in all frequency ranges supported by the terminal device, and all the frequency ranges supported by the terminal device may be, for example, some or all of frequency ranges predefined in a protocol. Generally, in a frequency band search process, the terminal device may sort frequency points in all the frequency ranges supported by the terminal device based on energy of received signals. For example, the terminal device may measure RSRP, RSRQ, or RSSIs of signals received on the frequency points, and then sort the frequency points in descending order of the RSRP, the RSRQ, the RSSIs, or the like. Specifically, for example, the terminal device may first determine SSB information corresponding to a frequency point with highest RSRP, highest RSRQ, or a highest RSSI. If no SSB is obtained based on the SSB information corresponding to the frequency point with the highest RSRP, the highest RSRQ, or the highest RSSI, the terminal device determines SSB information corresponding to a next frequency point, and continues determining SSB information corresponding to a next frequency point until an SSB is obtained based on corresponding SSB information.

It should be noted that the terminal device usually first performs SSB search on the prior frequency point. If the terminal device obtains an SSB on the prior frequency point but fails to access a network device, the terminal device may perform SSB search on the frequency points in all frequency ranges supported by the terminal device. All frequency ranges supported by the terminal device may be one or more frequency ranges, and one operating band may be determined by each of the one or more frequency ranges. Therefore, the terminal device may perform SSB search on all operating bands one by one, and stop performing SSB search on a next operating band when an SSB is found.

In this application, different frequency ranges predefined in the protocol may be divided into different operating bands. Some or all of the different operating bands may correspond to a same parameter. The parameter may include, for example, at least one of the following: a radio frequency indicator requirement, a subcarrier spacing (subcarrier spacing, SCS) of an SSB, a duplex mode, an applicable scenario, a channel bandwidth, a synchronization raster, and the like. The radio frequency indicator requirement may include, for example, transmit power. The duplex mode may include, for example, at least one of the following: a time division duplex (time division duplex, TDD) mode and a frequency division duplex (frequency division duplex, FDD) mode. The applicable scenario may include, for example, at least one of the following: an FR 1 scenario and an FR 2 scenario. The synchronization raster may be understood as a frequency domain position of a candidate SSB. The frequency domain position of the candidate SSB may be understood as a frequency domain position of a reference subcarrier in the candidate SSB. The reference subcarrier is usually a center subcarrier of the candidate SSB. For example, the reference subcarrier is a subcarrier numbered 120 in 240 consecutive subcarriers occupied by the candidate SSB. The candidate SSB may be understood as an SSB that may be sent by the network device. A maximum quantity of candidate SSBs may be understood as a maximum quantity of SSBs that may be sent by the network device. A location of the candidate SSB may be understood as one or more of the following: an index of the candidate SSB, a time domain position of the candidate SSB, a transmission opportunity of the candidate SSB, and the like. The index of the candidate SSB may also be referred to as a candidate index.

It should be noted that, in this application, one frequency range predefined in the protocol may include an interval determined by a maximum frequency and a minimum frequency. The frequency range may further include a boundary point or exclude a boundary point, for example, the maximum frequency and/or the minimum frequency. This is not limited herein.

In this application, the SSB may include a primary synchronization signal (primary synchronization signal, PSS), a secondary synchronization signal (secondary synchronization signal, SSS), and a physical broadcast channel (physical broadcast channel, PBCH). The SSB may be used by the terminal device to access the network device.

The first information includes correspondences between a plurality of frequency points in an operating band to which the first frequency point belongs and a plurality of pieces of SSB information. The operating band to which the first frequency point belongs is determined by one frequency range. For example, it may be understood as that the operating band to which the first frequency point belongs is one operating band determined by one frequency range predefined in the protocol. Different frequency ranges predefined in the protocol may be divided into different operating bands. This indicates that a plurality of operating bands need to be determined by a plurality of frequency ranges predefined in the protocol. Therefore, in this application, the operating band to which the first frequency point belongs is not an operating band formed by combining a plurality of operating bands. The correspondences between the plurality of frequency points and the plurality of pieces of SSB information include a correspondence between the first frequency point and the first SSB information. Each of the plurality of pieces of SSB information includes at least one of the following: an SSB periodicity, a maximum quantity of candidate SSBs, and a location of the candidate SSB. Optionally, the first information may further include correspondences between a plurality of frequency points in another operating band other than the operating band to which the first frequency point belongs and a plurality of pieces of SSB information. It should be understood that the correspondences in the another operating band in the first information are similar to the correspondences in the operating band to which the first frequency point belongs. Details are not described herein again.

Optionally, the correspondences between the plurality of frequency points in the operating band to which the first frequency point belongs and the plurality of pieces of SSB information may be understood as, for example, one-to-one correspondences between a plurality of frequency point number ranges to which a plurality of frequency point numbers belong and the plurality of pieces of SSB information. Similarly, that the correspondences between the plurality of frequency points and the plurality of pieces of SSB information include the correspondence between the first frequency point and the first SSB information may be understood as, for example, that the one-to-one correspondences between the plurality of frequency point number ranges to which the plurality of frequency point numbers belong and the plurality of pieces of SSB information include a correspondence between a frequency point number range to which a frequency point number of the first frequency point belongs and the first SSB information.

It should be noted that one of the plurality of frequency point numbers may belong to, for example, one or more frequency point number ranges. In this application, the frequency point number may be referred to as a global synchronization channel number (global synchronization channel number, GSCN), and the frequency point number range may be referred to as a range of GSCN (range of GSCN). It should be understood that one frequency point number range may include an interval determined by a maximum frequency point number and a minimum frequency point number, and the frequency point number range may further include a boundary point or exclude a boundary point, for example, the maximum frequency point number and/or the minimum frequency point number. This is not limited herein.

Optionally, when the first information includes one-to-one correspondences between a plurality of frequency point number ranges to which a plurality of frequency point numbers in the operating band to which the first frequency point belongs belong and the plurality of pieces of SSB information, for example, step 401 may include: The terminal device determines the frequency point number range to which the frequency point number of the first frequency point belongs; and the terminal device determines the first SSB information based on the frequency point number range to which the frequency point number of the first frequency point belongs and the first information.

It should be noted that different SSB information in the plurality of pieces of SSB information may be different in at least one of an SSB periodicity, a maximum quantity of candidate SSBs, a location of the candidate SSB, and the like. Optionally, each of the plurality of pieces of SSB information may be defined, for example, by using one SSB pattern. Different SSB patterns may be different in at least one of an SSB periodicity, a maximum quantity of candidate SSBs, a location of the candidate SSB, and the like.

Optionally, a relationship between different frequency point number ranges to which at least one of the plurality of frequency points belongs may be any one of the following.

In a first case, a second frequency point and a third frequency point in the plurality of frequency points respectively belong to a first frequency point number range and a second frequency point number range, and the first frequency point number range and the second frequency point number range partially overlap. In this way, frequency points belonging to different frequency point number ranges may be arranged in a cross manner on an operating band to which the first frequency point belongs. For example, FIG. 5 is a diagram in which frequency points belonging to different frequency point number ranges are arranged in a cross manner on an operating band 1 according to an embodiment of this application. As shown in FIG. 5, a frequency point number range 1 is [7711, 7721], a frequency point number range 2 is [7716, 7726], frequency point numbers of frequency points belonging to the frequency point number range 1 are respectively 7711 and 7721, and frequency point numbers of frequency points belonging to the frequency point number range 2 are respectively 7716 and 7726. The frequency point whose frequency point number is 7711 is adjacent to the frequency point whose frequency point number is 7716, the frequency point whose frequency point number is 7716 is adjacent to the frequency point whose frequency point number is 7721, and the frequency point whose frequency point number is 7721 is adjacent to the frequency point whose frequency point number is 7726. That is, the frequency points that belong to the frequency point number range 1 and the frequency points that belong to the frequency point number range 2 are arranged in a cross manner on the operating band 1.

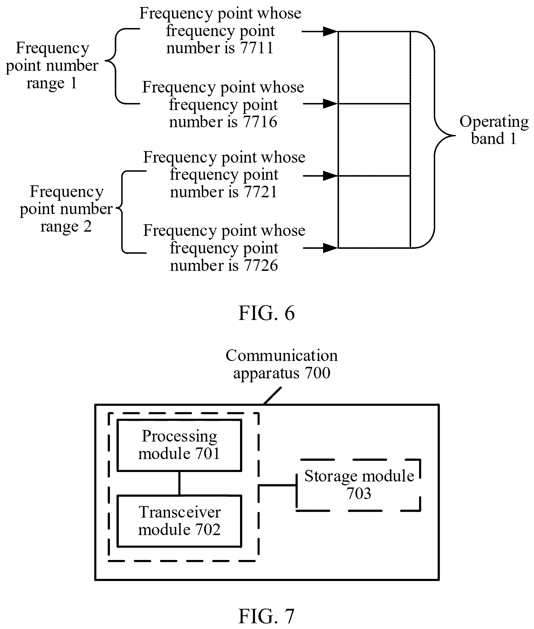

In a second case, a fourth frequency point and a fifth frequency point in the plurality of frequency points respectively belong to a third frequency point number range and a fourth frequency point number range, and the third frequency point number range and the fourth frequency point number range do not overlap. In this way, frequency points belonging to different frequency point number ranges may be arranged in a partition manner on an operating band to which the first frequency point belongs. For example, FIG. 6 is a diagram in which frequency points belonging to different frequency point number ranges are arranged in a partition manner on an operating band 1 according to an embodiment of this application. As shown in FIG. 6, a frequency point number range 1 is [7711, 7716], a frequency point number range 2 is [7721, 7726], frequency point numbers of frequency points belonging to the frequency point number range 1 are respectively 7711 and 7716, and frequency point numbers of frequency points belonging to the frequency point number range 2 are respectively 7721 and 7726. The frequency point whose frequency point number is 7711 is adjacent to the frequency point whose frequency point number is 7716, and the frequency point whose frequency point number is 7721 is adjacent to the frequency point whose frequency point number is 7726. That is, the frequency points that belong to the frequency point number range 1 and the frequency points that belong to the frequency point number range 2 are arranged in a partition manner on the operating band 1.

It should be noted that, in this application, in a possible implementation, some of different frequency point number ranges to which frequency points other than the at least one frequency point in the plurality of frequency points belong partially overlap, or different frequency point number ranges to which frequency points other than the at least one frequency point in the plurality of frequency points belong do not overlap. In another possible implementation, the frequency points other than the at least one frequency point in the plurality of frequency points may belong to a same frequency point number range.

For example, the frequency points other than the at least one frequency point in the plurality of frequency points may include a frequency point 7711, a frequency point 7715, a frequency point 7712, a frequency point 7716, a frequency point 7727, and a frequency point 7731. A frequency point number range to which the frequency point 7711 and the frequency point 7715 belong is [7711, 7721], and a frequency point number range to which the frequency point 7712 and the frequency point 7716 belong is [7712, 7726]. It can be learned that [7712, 7726] includes [7712, 7721] in [7711, 7721], that is, the frequency point number range to which the frequency point 7711 and the frequency point 7715 belong and the frequency point number range to which the frequency point 7712 and the frequency point 7716 belong partially overlap. A frequency point number range to which the frequency point 7727 and the frequency point 7731 belong and other frequency point number ranges do not overlap. Therefore, some of the different frequency point number ranges to which the frequency points other than the at least one frequency point in the plurality of frequency points belong partially overlap.

For another example, the frequency points other than the at least one frequency point in the plurality of frequency points may include a frequency point 7711, a frequency point 7712, a frequency point 7918, and a frequency point 7919. A frequency point number range to which the frequency point 7711 and the frequency point 7712 belong is [7711, 7917], and a frequency point number range to which the frequency point 7918 and the frequency point 7919 belong is [7918, 8124]. It can be learned that, the frequency point number range to which the frequency point 7711 and the frequency point 7712 belong and the frequency point number range to which the frequency point 7918 and the frequency point 7919 belong do not overlap.

Optionally, an interval between adjacent synchronization rasters corresponding to a same piece of SSB information in the plurality of pieces of SSB information is determined based on a unit interval, and the unit interval is a unit interval between adjacent synchronization rasters corresponding to a same piece of SSB information in the plurality of pieces of SSB information. This indicates that the interval between adjacent synchronization rasters corresponding to a same piece of SSB information in the plurality of pieces of SSB information is related to the unit interval.

It should be noted that the interval between adjacent synchronization rasters corresponding to a same piece of SSB information in the plurality of pieces of SSB information is determined based on the unit interval. For example, this may be applicable to the foregoing second case.

Optionally, that the interval between adjacent synchronization rasters corresponding to a same piece of SSB information in the plurality of pieces of SSB information is determined based on the unit interval includes: The interval between adjacent synchronization rasters corresponding to a same piece of SSB information in the plurality of pieces of SSB information is determined based on a quantity of the plurality of pieces of SSB information and the unit interval. For example, the interval between adjacent synchronization rasters corresponding to a same piece of SSB information in the plurality of pieces of SSB information is a product of the quantity of the plurality of pieces of SSB information and the unit interval. This indicates that the interval between adjacent synchronization rasters corresponding to a same piece of SSB information in the plurality of pieces of SSB information is related to the quantity of the plurality of pieces of SSB information and the unit interval.

It should be noted that the interval between adjacent synchronization rasters corresponding to a same piece of SSB information in the plurality of pieces of SSB information is determined based on the quantity of the plurality of pieces of SSB information and the unit interval. For example, this may be applicable to the foregoing first case.

Optionally, the first information may be, for example, in a form of a table. It should be understood that the following is merely an example, and a table form is not limited, and may be any row and/or any column in the table.

For example, in Table 1, the operating band to which the first frequency point belongs is nxx, where xx is a numeric number. Each of the plurality of pieces of SSB information includes only a maximum quantity of candidate SSBs. For example, $\overline{L_{max\_1}}$, $\overline{L_{max\_2}}$, ..., and $\overline{L_{max\_M}}$ are respectively maximum quantities of candidate SSBs included in different pieces of SSB information. It can be learned that Table 1 includes one-to-one correspondences between the plurality of frequency point number ranges to which the plurality of frequency point numbers in the operating band to which the first frequency point belongs belong and a plurality of maximum quantities of candidate SSBs. It should be noted that in Table 1,

$N_{GSCN}^{start}$ is a frequency point number of a minimum frequency point in the operating band to which the first frequency point belongs, and $N_{GSCN}^{end}$ is a frequency point number of a maximum frequency point in the operating band to which the first frequency point belongs. $N_{GSCN}^{start}$ may also be referred to as a frequency point number of a start frequency point in the operating band to which the first frequency point belongs, and $N_{GSCN}^{end}$ may also be referred to as a frequency point number of an end frequency point in the operating band to which the first frequency point belongs. M is a quantity of the plurality of maximum quantities of candidate SSBs, $N_{GSCN}^{Size}$ is a unit interval between adjacent synchronization rasters corresponding to a same maximum quantity of candidate SSBs in the plurality of maximum quantities of candidate SSBs, and $M * N_{GSCN}^{Size}$ is an interval between adjacent synchronization rasters corresponding to a same maximum quantity of candidate SSBs in the plurality of maximum quantities of candidate SSBs. In addition, in Table 1, different frequency point number ranges in the operating band to which the first frequency point belongs partially overlap. For example, a sum of a minimum frequency point number in a frequency point number range corresponding to $\overline{L_{max\_1}}$ and $N_{GSCN}^{Size}$ is a minimum frequency point number in a frequency point number range corresponding to $\overline{L_{max\_2}}$, and a sum of a maximum frequency point number in the frequency point number range corresponding to $\overline{L_{max\_1}}$ and $N_{GSCN}^{Size}$ is a maximum frequency point number in the frequency point number range corresponding to $\overline{L_{max\_2}}$, that is, the frequency point number range corresponding to $\overline{L_{max\_1}}$ and the frequency point number range corresponding to $\overline{L_{max\_2}}$ partially overlap.

Table 1

| Operating band | Maximum quantity of candidate SSBs | Frequency point number range |
|---|---|---|
| nxx | $\overline{L_{max\_1}}$ | $N_{GSCN}^{start}$-<M $* N_{GSCN}^{Size}$>-$N_{GSCN}^{end}$ |
| | $\overline{L_{max\_2}}$ | $N_{GSCN}^{start} + 1 * N_{GSCN}^{Size}$-<M $* N_{GSCN}^{Size}$>-$N_{GSCN}^{end} + 1 * N_{GSCN}^{Size}$ |
| | ... | ... |
| | $\overline{L_{max\_M}}$ | $N_{GSCN}^{start}+(M-1) * N_{GSCN}^{Size}$-<M $* N_{GSCN}^{Size}$>-$N_{GSCN}^{end}+(M-1) * N_{GSCN}^{Size}$ |

To more clearly learn that different frequency point number ranges in the operating band to which the first frequency point belongs partially overlap, refer to Table 2. As shown in Table 2, a frequency point number range [7714, 8329] includes [7714, 8328] in a frequency point number range [7713, 8328], [7714, 8327] in a frequency point number range [7712, 8327], and [7714, 8326] in a frequency point number range [7711, 8326], that is, in Table 2, the frequency point number range [7714, 8329] and other frequency point number ranges in Table 2 partially overlap. Similarly, the other frequency point number ranges in Table 2 also partially overlap.

Table 2

| Operating band | Maximum quantity of candidate SSBs | Frequency point number range |
|---|---|---|
| n77 | 8 | 7711-<4>-8326 |
| | 64 | 7712-<4>-8327 |
| | 128 | 7713-<4>-8328 |
| | 256 | 7714-<4>-8329 |

For another example, refer to Table 3. Differences between Table 3 and Table 1 lie in that: 1. In Table 3, an interval between adjacent synchronization rasters corresponding to a same maximum quantity of candidate SSBs in the plurality of maximum quantities of candidate SSBs is $N_{GSCN}^{Size}$ , while in Table 1, the interval between adjacent synchronization rasters corresponding to a same maximum quantity of candidate SSBs in the plurality of maximum quantities of candidate SSBs is $M * N_{GSCN}^{Size}$ . 2. In Table 3, different frequency point number ranges in the operating band to which the first frequency point belongs do not overlap, while in Table 1, different frequency point number ranges in the operating band to which the first frequency point belongs partially overlap.

Table 3

| Operating band | Maximum quantity of candidate SSBs | Frequency point number range |
|---|---|---|
| nxx | $\overline{L_{\text{max\_1}}}$ | $N_{GSCN}^{start\_1}$-$<N_{GSCN}^{Size}>$-$N_{GSCN}^{end\_1}$ |
| | $\overline{L_{\text{max\_2}}}$ | $N_{GSCN}^{end\_1}$+$N_{GSCN}^{Size}$-$<N_{GSCN}^{Size}>$-$N_{GSCN}^{end\_2}$ |
| | ... | ... |
| | $\overline{L_{\text{max\_M}}}$ | $N_{GSCN}^{endM-1}$+$N_{GSCN}^{Size}$-$<N_{GSCN}^{Size}>$-$N_{GSCN}^{end\_M}$ |

To more clearly learn that different frequency point number ranges in the operating band to which the first frequency point belongs do not overlap, refer to Table 4. As shown in Table 4, a frequency point number range [7711, 7917], a frequency point number range [7918, 8124], and a frequency point number range [8125, 8329] do not overlap.

Table 4

| Operating band | Maximum quantity of candidate SSBs | Frequency point number range |
|---|---|---|
| n77 | 8 | 7711-<1>-7917 |
| | 64 | 7918-<1>-8124 |
| | 128 | 8125-<1>-8329 |

Optionally, the first information may further include correspondences between the plurality of frequency points in the operating band to which the first frequency point belongs and SCSs of at least one SSB. For example, the plurality of frequency points in the operating band to which the first frequency point belongs correspond to SCSs of one SSB, or the plurality of frequency points in the operating band to which the first frequency point belongs one-to-one correspond to SCSs of a plurality of SSBs.

For example, refer to Table 5. A difference between Table 5 and Table 1 lies in that Table 5 further includes one-to-one correspondences between a plurality of frequency point number ranges to which the plurality of frequency points in the operating band to which the first frequency point belongs belong and SCSs of a plurality of SSBs.

Table 5

| Operating band | SCS of an SSB | Maximum quantity of candidate SSBs | Frequency point number range |
|---|---|---|---|
| nxx | SCS 1 | $\overline{L_{\text{max\_1}}}$ | $N_{GSCN}^{start}$-$<M * N_{GSCN}^{Size}>$-$N_{GSCN}^{end}$ |
| | SCS 2 | $\overline{L_{\text{max\_2}}}$ | $N_{GSCN}^{start} + 1 * N_{GSCN}^{Size}$-$<M * N_{GSCN}^{Size}>$-$N_{GSCN}^{end} + 1 * N_{GSCN}^{Size}$ |
| | ... | ... | ... |
| | SCS M | $\overline{L_{\text{max\_M}}}$ | $N_{GSCN}^{start}+(M-1) * N_{GSCN}^{Size}$-$<M * N_{GSCN}^{Size}>$-$N_{GSCN}^{end}+(M-1) * N_{GSCN}^{Size}$ |

For another example, refer to Table 6. Table 6 is similar to Table 5, and a difference lies in that a maximum frequency point number in a frequency point number range in Table 6 is different from a maximum frequency point number in a frequency point number range in Table 5. For example, a maximum frequency point number in a frequency point number range corresponding to the SCS 1 in Table 5 is different from a maximum frequency point number in a frequency point number range corresponding to an SCS 1 in Table 6. In Table 6, a start frequency point number of an operating band nxx band is $N_{GSCN}^{start}$, and an end frequency point number is $N_{GSCN}^{end}$.

Table 6

| Operating band | SCS of an SSB | Maximum quantity of candidate SSBs | Frequency point number range |
|---|---|---|---|
| nxx | SCS 1 | $\underline{L_{\text{max\_1}}}$ | $N_{GSCN}^{start}\text{-}<\text{M}*N_{GSCN}^{Size}>\text{-}N_{GSCN}^{end}-(\text{M}-1)*N_{GSCN}^{Size}$ |
| | SCS 2 | $\underline{L_{\text{max\_2}}}$ | $N_{GSCN}^{start}+1*N_{GSCN}^{Size}\text{-}<\text{M}*N_{GSCN}^{Size}>\text{-}N_{GSCN}^{end}-(\text{M}-2)*N_{GSCN}^{Size}$ |
| | ... | ... | ... |
| | SCS M | $\underline{L_{\text{max\_M}}}$ | $N_{GSCN}^{start}+(\text{M}-1)*N_{GSCN}^{Size}\text{-}<\text{M}*N_{GSCN}^{Size}>\text{-}N_{GSCN}^{end}$ |

With reference to Table 7, the following uses content described in Table 6 as an example. Specifically, in Table 7, M is 4, $N_{GSCN}^{Size}=1$, $N_{GSCN}^{start}=7805$, and $N_{GSCN}^{end}=7952$. It can be learned that, in Table 7, different frequency point number ranges in an operating band N215 partially overlap. When a maximum quantity of candidate SSBs is 8, a frequency point number range is 7805-<4>-7949, and frequency point numbers belonging to the frequency point number range are {7805, 7809, 7813, 7817, ..., 7949}; when a maximum quantity of candidate SSBs is 64, a frequency point number range is 7806-<4>-7950, and frequency point numbers belonging to the frequency point number range are {7806, 7810, 7814, 7818, ..., 7950}; when a maximum quantity of candidate SSBs is 128, a frequency point number range is 7807-<4>-7951, and frequency point numbers belonging to the frequency point number range are {7807, 7811, 7815, 7819, ..., 7951}; or when a maximum quantity of candidate SSBs is 256, a frequency point number range is 7808-<4>-7952, and frequency point numbers belonging to the frequency point number range are {7808, 7812, 7816, 7820, ..., 7952}. In this way, different frequency point numbers belonging to the operating band N215 correspond to different maximum quantities of candidate SSBs, and different maximum quantities of candidate SSBs are distinguished by using different frequency point numbers. When receiving the SSB, the terminal device determines a frequency point number, and may obtain a maximum quantity of candidate SSBs of the SSB corresponding to the frequency point number.

Table 7

| Operating band | SCS of an SSB | Maximum quantity of candidate SSBs | Frequency point number range |
|---|---|---|---|
| N215 | 30 kHz | 8 | 7805-<4>-7949 |
| | 30 kHz | 64 | 7806-<4>-7950 |
| | 30 kHz | 128 | 7807-<4>-7951 |
| | 30 kHz | 256 | 7808-<4>-7952 |

Optionally, the method may further include step 402.

402: The terminal device receives, on the first frequency point based on the first SSB information, an SSB sent by the network device.

Correspondingly, the network device sends the SSB on the first frequency point.

Optionally, step 402 may include, for example, the following: The terminal device receives, at the location of the candidate SSB on the first frequency point based on the first SSB information and the SSB periodicity, the SSB sent by the network device. It should be understood that, after the terminal device receives the SSB, the terminal device may receive and demodulate, based on the SSB, the system information sent by the network device, and then initiate a random access procedure based on the system information, to establish a radio resource control (radio resource control, RRC) connection to the network device.

It can be learned that in the foregoing solution, the terminal device may receive, in one operating band by using one of a plurality of pieces of candidate SSB information, the SSB sent by the network device, so that there are more possibilities for SSB information used in a same operating band to meet different access requirements. This helps reduce an unnecessary access delay, and further improves access performance.

The foregoing mainly describes the solutions provided in this application from a perspective of interaction between devices. It may be understood that in the foregoing implementations, to implement the foregoing functions, each device includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the network device or the terminal device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

FIG. 7 is a diagram of a structure of a communication apparatus according to an embodiment of this application. The communication apparatus 700 may be used in the method shown in FIG. 4. As shown in FIG. 7, the communication apparatus 700 includes a processing module 701 and a transceiver module 702. The processing module 701 may be one or more processors, and the transceiver module 702 may be a transceiver or a communication interface. The communication apparatus may be configured to implement a function of the terminal device or the network device in any one of the foregoing method embodiments, or configured to implement a function of a network element in any one of the foregoing method embodiments. The network element or network function may be a network element in a hardware device, a software function running on dedicated hardware, or a virtualization function instantiated on a platform (for example, a cloud platform). Optionally, the communication apparatus 700 may further include a storage module 703, configured to store program code and data of the communication apparatus 700.

In an instance, when the communication apparatus is used as the terminal device or a chip used in the terminal device, the communication apparatus performs the steps performed by the terminal device in the foregoing method embodiments. The transceiver module 702 is configured to support communication with the network device and the like. The transceiver module specifically performs sending and/or receiving actions performed by the terminal device in FIG. 4, for example, supports the terminal device in performing step 402, and/or performing another process of the technology described in this specification. The processing module 701 may be configured to support the communication apparatus 700 in performing the processing action in the foregoing method embodiments, for example, support the terminal device in performing step 401, and/or performing another process of the technology described in this specification.

For example, the processing module 701 is configured to determine first SSB information based on a first frequency point and first information. The transceiver module 702 is configured to receive, on the first frequency point based on the first SSB information, an SSB sent by the network device, where the first information includes correspondences between a plurality of frequency points in an operating band to which the first frequency point belongs and a plurality of pieces of SSB information, the operating band to which the first frequency point belongs is determined by one frequency range, the correspondences between the plurality of frequency points and the plurality of pieces of SSB information include a correspondence between the first frequency point and the first SSB information, and each of the plurality of pieces of SSB information includes at least one of the following: an SSB periodicity, a maximum quantity of candidate SSBs, and a location of the candidate SSB.

In a possible implementation, when the terminal device or the network device is a chip, the transceiver module 702 may be a communication interface, a pin, a circuit, or the like. The communication interface may be configured to input to-be-processed data into the processor, and may output a processing result of the processor to the outside. During specific implementation, the communication interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 701 may be a processor. The processor may execute computer-executable instructions stored in the storage module, so that the chip performs the method in the embodiment in FIG. 4.

Further, the processor may include a controller, an arithmetic unit, and a register. For example, the controller is mainly responsible for instruction decoding, and transmitting a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. During specific implementation, a hardware architecture of the processor may be an ASIC architecture, a microprocessor without interlocked piped stages (microprocessor without interlocked piped stages, MIPS) architecture, an advanced reduced instruction set computer machine (advanced RISC machine, ARM) architecture, a network processor (network processor, NP) architecture, or the like. The processor may be a single-core or multi-core processor.

The storage module may be a storage module inside the chip, for example, a register or a cache. Alternatively, the storage module may be a storage module, for example, a ROM, another type of static storage device that can store static information and instructions, or a RAM, located outside the chip.

It should be noted that a function corresponding to each of the processor and the interface may be implemented by using a hardware design, may be implemented by using a software design, or may be implemented by a combination of software and hardware. This is not limited herein.

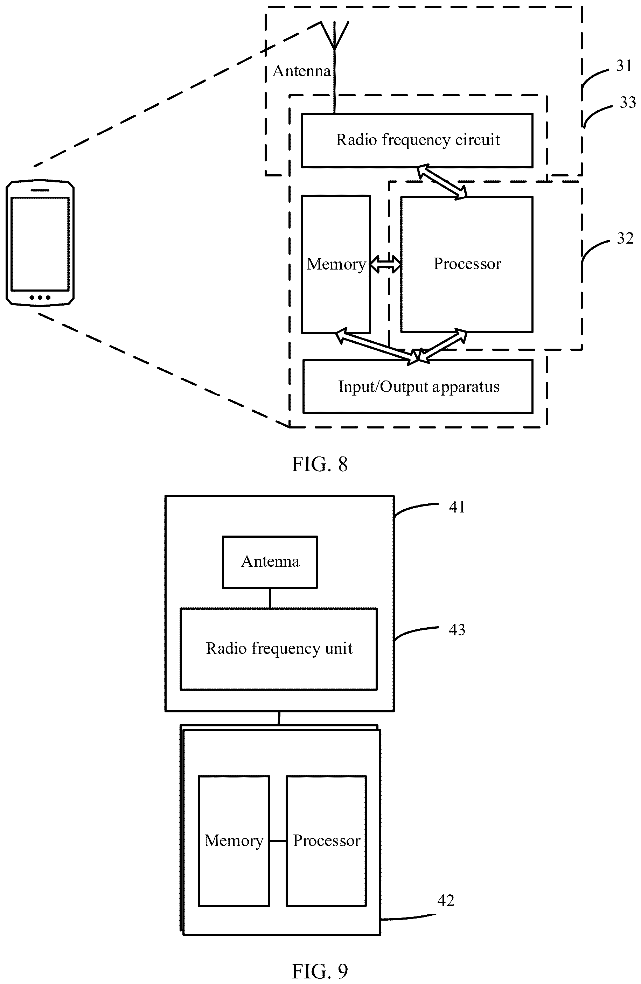

FIG. 8 is a diagram of a simplified structure of a terminal device according to an embodiment of this application. For ease of understanding and illustration, in FIG. 8, a mobile phone is used as an example of the terminal device. As shown in FIG. 8, the terminal device includes at least one processor, and may further include a radio frequency circuit, an antenna, and an input/output apparatus. The processor may be configured to process a communication protocol and communication data, and may be further configured to control the terminal device, execute a software program, process data of the software program, and the like. The terminal device may further include a memory. The memory is mainly configured to store a software program and data. These related programs may be loaded into the memory when the communication apparatus is delivered from a factory, or may be loaded into the memory when needed later. The radio frequency circuit is mainly configured to: perform conversion between a baseband signal and a radio frequency signal, and process the radio frequency signal. The antenna is mainly configured to receive/send a radio frequency signal in an electromagnetic wave form, and the antenna is the antenna provided in embodiments of this application. The input/output apparatus, such as a touchscreen, a display, or a keyboard, is mainly configured to: receive data input by a user and output data to the user. It should be noted that some types of terminal devices may have no input/output apparatus.

When data needs to be sent, after performing baseband processing on the to-be-sent data, the processor outputs a baseband signal to the radio frequency circuit. The radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 8 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, an antenna having sending and receiving functions and the radio frequency circuit may be considered as a receiving unit and a sending unit (which may also be collectively referred to as a transceiver unit) of the terminal device, and a processor having a processing function may be considered as a processing unit of the terminal device. As shown in FIG. 8, the terminal device includes a receiving module 31, a processing module 32, and a sending module 33. The receiving module 31 may also be referred to as a receiver, a receiving machine, a receiver circuit, or the like. The sending module 33 may also be referred to as a sender, a transmitter, a transmitter machine, a transmitter circuit, or the like. The processing module 32 may also be referred to as a processor, a processing board, a processing apparatus, or the like.

For example, the processing module 32 is configured to perform a function of the terminal device in the embodiment shown in FIG. 4.

FIG. 9 is a diagram of a simplified structure of a network device according to an embodiment of this application. The network device includes a baseband part 42 and a part for radio frequency signal transmission/reception and conversion. The part for radio frequency signal transmission/reception and conversion further includes a receiving module 41 part and a sending module 43 part (which may also be collectively referred to as a transceiver module). The part for radio frequency signal transmission/reception and conversion is mainly configured to: send/receive a radio frequency signal and perform conversion between a radio frequency signal and a baseband signal. The baseband part 42 is mainly configured to: perform baseband processing, control the network device, and the like. The receiving module 41 may also be referred to as a receiver, a receiving machine, a receiver circuit, or the like. The sending module 43 may also be referred to as a sender, a transmitter, a transmitter machine, a transmitter circuit, or the like. The baseband part 42 is usually a control center of the network device, may also be referred to as a processing module, and is configured to perform the steps performed by the network device in FIG. 4. For details, refer to the foregoing descriptions of the related parts.

The baseband part 42 may include one or more boards. Each board may include one or more processors and one or more memories. The processor is configured to read and execute a program in the memory, to implement a baseband processing function and control the network device. If there are a plurality of boards, the boards may be interconnected to improve a processing capability. In an optional implementation, the plurality of boards may share one or more processors, or the plurality of boards share one or more memories, or the plurality of boards share one or more processors at the same time.

For example, the sending module 43 is configured to perform a function of the network device in the embodiment shown in FIG. 4.

An embodiment of this application further provides a communication apparatus, including a processor. The processor is coupled to a memory. The memory stores a computer program. The processor is configured to invoke the computer program in the memory, so that the communication apparatus performs the embodiment shown in FIG. 4.

An embodiment of this application further provides a communication apparatus, including a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the embodiment shown in FIG. 4 by using a logic circuit or by executing code instructions.

An embodiment of this application further provides a computer-readable storage medium. The storage medium stores a computer program or instructions. When the computer program or the instructions are executed by a computer, the embodiment shown in FIG. 4 is implemented.

An embodiment of this application further provides a computer program product. When a computer reads and executes the computer program product, the computer is enabled to perform the embodiment shown in FIG. 4.

The units described as separate parts may or may not be physically separate, and parts displayed as units may or may not be physical units, may be located in one place, or may be distributed on a plurality of network units. Some or all of the units may be selected based on an actual requirement, to achieve the objectives of the solutions in embodiments of this application. In addition, network element units in embodiments of this application may be integrated into one processing unit, or each of the units may exist alone physically, or two or more units are integrated into one unit. The integrated unit may be implemented in a form of hardware, or may be implemented in a form of a software network element unit.

When the integrated unit is implemented in the form of the software network element unit and sold or used as an independent product, the integrated unit may be stored in a computer-readable storage medium. Based on such an understanding, an essentially contributing part in the technical solutions of this application, or all or some of the technical solutions may be embodied in a form of a software product. The computer software product is stored in a storage medium and includes several instructions for instructing a computer device (which may be a personal computer, a terminal device, a cloud server, a network device, or the like) to perform all or some of the steps of the method in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc. The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   determining first synchronization signal block SSB information based on a first frequency point and first information; and
   receiving, on the first frequency point based on the first SSB information, an SSB sent by a network device, wherein
   the first information comprises correspondences between a plurality of frequency points in an operating band to which the first frequency point belongs and a plurality of pieces of SSB information, the operating band to which the first frequency point belongs is determined by one frequency range, the correspondences between the plurality of frequency points and the plurality of pieces of SSB information comprise a correspondence between the first frequency point and the first SSB information, and each of the plurality of pieces of SSB information comprises at least one of the following: an SSB periodicity, a maximum quantity of candidate SSBs, and a location of the candidate SSB.

2. The method according to claim 1, wherein a second frequency point and a third frequency point in the plurality of frequency points respectively belong to a first frequency point number range and a second frequency point number range, and the first frequency point number range and the second frequency point number range partially overlap.

3. The method according to claim 1, wherein a fourth frequency point and a fifth frequency point in the plurality of frequency points respectively belong to a third frequency point number range and a fourth frequency point number range, and the third frequency point number range and the fourth frequency point number range do not overlap.

4. The method according to any one of claims 1 to 3, wherein an interval between adjacent synchronization rasters corresponding to a same piece of SSB information in the plurality of pieces of SSB information is determined based on a unit interval, and the unit interval is a unit interval between adjacent synchronization rasters corresponding to a same piece of SSB information in the plurality of pieces of SSB information.

5. The method according to claim 4, wherein that an interval between adjacent synchronization rasters corresponding to a same piece of SSB information in the plurality of pieces of SSB information is determined based on a unit interval comprises:
the interval between adjacent synchronization rasters corresponding to a same piece of SSB information in the plurality of pieces of SSB information is determined based on a quantity of the plurality of pieces of SSB information and the unit interval.

6. A communication apparatus, wherein the communication apparatus comprises a module configured to perform the method according to any one of claims 1 to 5.

7. A communication apparatus, comprising a processor, wherein the processor is coupled to a memory, and the memory stores a computer program; and the processor is configured to invoke the computer program in the memory, to enable the communication apparatus to perform the method according to any one of claims 1 to 5.

8. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus; and the processor is configured to implement the method according to any one of claims 1 to 5 by using a logic circuit or by executing code instructions.

9. A computer-readable storage medium, wherein the storage medium stores a computer program or instructions, and when the computer program or the instructions are executed by a computer, the method according to any one of claims 1 to 5 is implemented.

10. A computer program product, wherein when a computer reads and executes the computer program product, the computer is enabled to perform the method according to any one of claims 1 to 5.

FIG. 1

Terminal device

NG-RAN

5G core network

gNB

NR Uu

NG

NTN gateway

Remote radio unit

2-1

Terminal device

NG-RAN

5G core network

gNB

NR Uu

NG

NG over SRI

NTN gateway

2-2

Terminal device

NG-RAN

5G core network

gNB

NR Uu

NG

NG over SRI

NTN gateway

Terminal device

5G core network

XN (over SRI)

NR Uu

NG

gNB

NG over SRI

NTN gateway

2-3

Terminal device

NG-RAN

5G core network

gNB-DU

gNB-CU

NR Uu

F1

NG

F1 over SRI

NTN gateway

2-4

FIG. 2

300

301    307    303

Processor    | Processor |

CPU 0    | CPU 0 |

Communication
line 302
CPU 1    | CPU 1 |

Memory

304    305    306

Communication
interface    | Output device |    | Input device |

FIG. 3

Determine first SSB information based on a
first frequency point and first information    401

Receive, on the first frequency point based
on the first SSB information, an SSB sent by
a network device    402

FIG. 4

Frequency point whose
frequency point
number is 7711

Frequency
point number
range 1
Frequency point whose
frequency point
number is 7716

Operating
band 1

Frequency point whose
frequency point
number is 7721

Frequency
point number
range 2
Frequency point whose
frequency point
number is 7726

FIG. 5

Frequency point whose frequency point number is 7711

Frequency point number range 1

Frequency point whose frequency point number is 7716

Operating band 1

Frequency point whose frequency point number is 7721

Frequency point number range 2

Frequency point whose frequency point number is 7726

FIG. 6

Communication apparatus 700

Processing module 701

Storage module 703

Transceiver module 702

FIG. 7

FIG. 8

FIG. 9

## INTERNATIONAL SEARCH REPORT

| International application No. |
|---|
| **PCT/CN2023/123206** |

| A. | CLASSIFICATION OF SUBJECT MATTER |
|---|---|

H04W48/10(2009.01)i

According to International Patent Classification (IPC) or to both national classification and IPC

| B. | FIELDS SEARCHED |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT; WPABSC; ENTXTC; VEN; CJFD: 频点, frequency point, 频段, frequency band, 同步信号块, SSB, synchronization signal block, 图样, pattern, 对应, 映射, correspond+, map+, 延时, 时延, delay+, 周期, period, 数量, 数目, number, amount, 位置, position, location, 栅格, grid

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110381588 A (HUAWEI TECHNOLOGIES CO., LTD.) 25 October 2019 (2019-10-25) description, paragraphs 127-391, and figures 1-13 | 1, 6-10 |
| A | CN 113875303 A (HUAWEI TECHNOLOGIES CO., LTD.) 31 December 2021 (2021-12-31) entire document | 1-10 |
| A | CN 113258977 A (HUAWEI TECHNOLOGIES CO., LTD.) 13 August 2021 (2021-08-13) entire document | 1-10 |
| A | CN 110651510 A (QUALCOMM INC.) 03 January 2020 (2020-01-03) entire document | 1-10 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 November 2023** | **24 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/123206**

| Patent document cited in search report | | | Publication date (day/month/year) | Patent family member(s) | | | Publication date (day/month/year) |
|---|---|---|---|---|---|---|---|
| CN | 110381588 | A | 25 October 2019 | WO | 2019196689 | A1 | 17 October 2019 |
| CN | 113875303 | A | 31 December 2021 | EP | 4017166 | A1 | 22 June 2022 |
| | | | | EP | 4017166 | A4 | 31 August 2022 |
| | | | | WO | 2021031390 | A1 | 25 February 2021 |
| | | | | WO | 2021031305 | A1 | 25 February 2021 |
| | | | | WO | 2021031002 | A1 | 25 February 2021 |
| | | | | CA | 3148156 | A1 | 25 February 2021 |
| | | | | US | 2022174624 | A1 | 02 June 2022 |
| | | | | JP | 2022544799 | A | 21 October 2022 |
| CN | 113258977 | A | 13 August 2021 | None | | | |
| CN | 110651510 | A | 03 January 2020 | KR | 20190130048 | A | 20 November 2019 |
| | | | | KR | 102125179 | B1 | 19 June 2020 |
| | | | | TW | 201902274 | A | 01 January 2019 |
| | | | | TWI | 771414 | B | 21 July 2022 |
| | | | | BR | 112019024025 | A2 | 09 June 2020 |
| | | | | EP | 3917227 | A1 | 01 December 2021 |
| | | | | KR | 20210054066 | A | 12 May 2021 |
| | | | | KR | 102290809 | B1 | 17 August 2021 |
| | | | | US | 2018337755 | A1 | 22 November 2018 |
| | | | | US | 10270573 | B2 | 23 April 2019 |
| | | | | KR | 20190142349 | A | 26 December 2019 |
| | | | | KR | 102281709 | B1 | 23 July 2021 |
| | | | | TW | 202243514 | A | 01 November 2022 |
| | | | | EP | 3626002 | A1 | 25 March 2020 |
| | | | | EP | 3626002 | B1 | 02 March 2022 |
| | | | | JP | 2020520192 | A | 02 July 2020 |
| | | | | JP | 6839304 | B2 | 03 March 2021 |
| | | | | US | 2019288813 | A1 | 19 September 2019 |
| | | | | US | 10917211 | B2 | 09 February 2021 |
| | | | | WO | 2018213026 | A1 | 22 November 2018 |
| | | | | CA | 3061369 | A1 | 22 November 2018 |
| | | | | CA | 3061369 | C | 16 November 2021 |
| | | | | EP | 4013142 | A1 | 15 June 2022 |

Form PCT/ISA/210 (patent family annex) (July 2022)

**REFERENCES CITED IN THE DESCRIPTION**

**Patent documents cited in the description**

- CN 202211380676